(19) Europäisches Patentamt
European Patent Office
Office européen des brevets

(11) Veröffentlichungsnummer: **0 099 029**
**A1**

(12) # EUROPÄISCHE PATENTANMELDUNG

(21) Anmeldenummer: 83106405.0

(22) Anmeldetag: 01.07.83

(51) Int. Cl.[3]: A 01 N 57/12
A 01 N 25/04
//(A01N57/12, 37/46)

(30) Priorität: 10.07.82 DE 3225940

(43) Veröffentlichungstag der Anmeldung: 25.01.84 Patentblatt 84/4

(84) Benannte Vertragsstaaten: AT BE CH DE FR GB IT LI LU NL SE

(71) Anmelder: A. Nattermann & Cie. GmbH
Nattermannallee 1
D-5000 Köln 30(DE)

(72) Erfinder: Ghyczy, Miklos, Dr.
Am Serviesberg 12
D-5000 Köln 41(DE)

(72) Erfinder: Etschenberg, Eugen, Dr.
Hirseweg 10
D-5000 Köln 41(DE)

(72) Erfinder: Osthoff, Heinrich, Dr.
Ronsdorfer Strasse 12
D-5030 Hürth(DE)

(72) Erfinder: Wendel, Armin
Goethestrasse 20
D-5000 Köln 40(DE)

(74) Vertreter: Redies, Bernd, Dr. rer. nat. et al,
Redies, Redies, Türk & Gille Brucknerstrasse 20
D-4000 Düsseldorf 13(DE)

(54) **Herbizid-Emulsionskonzentrate.**

(57) Herbizid-Emulsionskonzentrate, bestehend aus einem herbiziden Wirkstoff der allgemeinen Formel

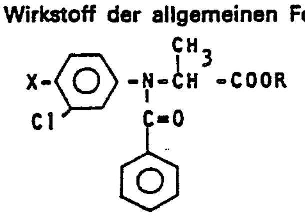

I

einem Phospholipid und einem Hydroxyethylamid der Formel $CH_3(CH_2)_nCONHCH_2CH_2\text{-}OH$ neben üblichen Träger-, Verdünnungs-, Lösungs- und/oder anderen inerten Hilfsmitteln.

EP 0 099 029 A1

Anmelder: A. Nattermann & Cie GmbH
Nattermannallee 1, 5000 Köln 30

Titel: Herbizid—Emulsionskonzentrate

## Beschreibung

Die Erfindung betrifft neue Herbizid-Emulsionskonzentrate bestehend aus einem Benzoylalaninderivat und einen Phospholipid gemäß den Ansprüchen 1-17.

Es ist bereits bekannt, daß Benzoylalanin-Derivate der allgemeinen Formel I

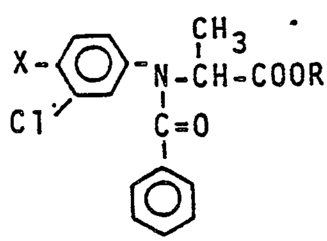

I

X = Cl oder F und R = $C_{1-4}$-Alkyl
als Herbizide eingesetzt werden können (z.B. DE-OS 2349970, DE-OS 25 27 913), die gute herbizide Wirkung besitzen.

Es wurde nun gefunden, daß man die Wirksamkeit sowie die Selektivität von Benzoylalanin-Derivaten der allgemeinen Formel I wesentlich verbessern kann, wenn man sie zusammen mit einem Phospholipid in Gegenwart eines Lösungsvermittlers der allgemeinen Formel II

$$CH_3(CH_2)_n\text{-}CONHCH_2CH_2OH \qquad II$$

in der n = 3, 4 oder 5 bedeuten neben üblichen Träger-, Verdünnungs-, Lösungs- und/oder anderen inerten Hilfsmitteln zu Emulsionskonzentraten verarbeitet.
Die erhaltenen Emulsionskonzentrate können unter Zusatz von Wasser zu üblichen Spritzbrühen verarbeitet werden.

Als Phospholipide kommen natürliche oder synthetische Phospholipide aus der Gruppe Phosphatidylcholin, den hydrierten Phosphatidylcholinen, Phosphatidylethanolamin, den N-Acylphosphatidylethanolaminen, Phosphatidylinosit, Phosphatidylserin und Phosphatidylglycerol oder einem Gemisch aus mehreren solcher Phospholipide, wie z.B. Gemische aus Phosphatidylcholin und Phosphatidylethanolamin oder Phosphatidylcholin mit Phosphatidylethanolamin und N-Acylphosphatidylethanolamin oder sonstigen Phosphatidyl-Mischungen mit 10 - 60% Phosphatidylcholin-Anteil in Frage.
Besonders bevorzugt sind natürliche Phosphatidylcholine, die nach den in den folgenden Patenten beschriebenen Verfahren erhalten werden können: DE-PS 10 47 597, DE-PS 10 53 299, DE-PS 16 17 679, DE-PS 16 17 680, deutsche Patentanmeldungen DE-OS 30 47 048, DE-OS 30 47 012, oder DE-OS 30 47 011,
Als N-Acyl-phosphatidylethanolamine kommen insbesondere diejenigen in Betracht, in denen die Acylgruppe sich von gesättigten oder olefinisch ungesättigten Fettsäuren mit 2-20 Kohlenstoffatomen, insbesondere die gesättigten mit 2-5 Kohlenstoffatomen oder die gesättigten oder einmal olefinisch ungesättigten mit 14, 16, 18 oder 20 Kohlenstoffatomen in Frage.

Besonders bevorzugt sind Phospholipide, die

10 - 50 % Phosphatidylcholin

10 - 30 % Phosphatidylethanolamin

10 - 30 % N-Acylphosphatidylethanolamin

enthalten.

Als Herbizid kommen Benzoylalanin-Derivate der allgemeinen Formel I

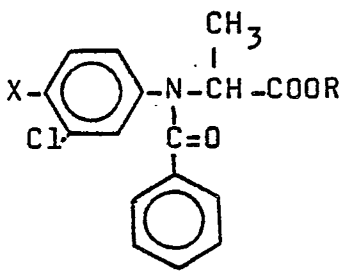

I

X = Cl oder F

R = $C_{1-4}$-Alkyl

wie z.B.

N-Benzoyl-N-(3,4-dichlorphenyl)-DL-alanin-ethylester,

N-Benzoyl-N-(3-chlor-4-fluorphenyl)-DL-alanin-methylester,

N-Benzoyl-N-(3-chlor-4-fluorphenyl)-DL-alanin-isopropylester,

N-Benzoyl-N-(3-chlor-4-fluorphenyl)-L-alanin-isopropylester

in Frage.

Die Verbindungen der allgemeinen Formel I sind bekannte Verbindungen, die z.B. nach den in GB-PS 11 64 160 und GB 14 37 711 beschriebenen Verfahren erhalten werden können.

Zur Herstellung der neuen Herbizid-Emulsionskonzentrate wird das entsprechende Phospholipid in einem geeigneten Lösungsmittel, wie z.B. Toluol, Essigester, Xylol, Benzin, Isophoron, Methanol, Ethanol oder Butanol oder Gemische dieser Lösungsmiltel gelöst. In die Phospholipidlösung wird unter Zusatz geeigneter Emulgatoren und Lösungsvermittler und ggfs. weiterer inerter Hilfsstoffe das Herbizid eingebracht und unter leichter Erwärmung gelöst bzw. emul-

giert oder suspendiert.
Das Emuisionskonzentrat kann auch hergestellt werden, indem alle Stoffe gleichzeitig zusammengegeben werden und das entsprechende Konzentrat unter Rühren hergestellt wird.

Beispiel 1

Herbizide Wirksamkeit

Die herbizide Wirksamkeit der Verbindungen gemäß der Erfindung wurde in Form von Blattsprühmitteln auf 3-keimblättrige Sämlinge der folgenden Pflanzenarten untersucht: Mais (Zea mays), Hafer (Avena sativa), Guineagras (Panicum maximum), Erbse (Pisum sativum), Rotklee (Trifolium pratense), Raps (Brassica napus) und Zuckerrübe (Beta vulgaris).
Als Formulierungen wurden die in Beispiel 3-5 hergestellten Formulierungen eingesetzt. Als Vergleich diente die bekannte Formulierung gemäß DE-OS 16 43 527, bestehend aus 50 Vol.-Teilen Aceton, 50 Vol.-Teilen Wasser, 0,5 Gew.-Teilen eines Alkylphenyol/Ethylenoxyd-Kondensats, das unter der Handelsbezeichnung Triton X-155 erhältlich ist, und einer erfindungsgemäßen Verbindung in wechselnden Mengen. Diese Formulierungen wurden in einer Menge entsprechend 400 Ltr. pro Hektar Volumen bei Dosierungsmengen entsprechend 10 und 1kg aktives Material pro Hektar angewendet.

Kontrollversuche wurden ebenfalls durchgeführt, wobei Sämlinge mit den gleichen Volumina der Formulierungen bespritzt wurden, die aber keine Versuchsverbindungen enthielten.
Die herbiziden Wirkungen der Verbindungen wurden 2, 7 und 14 Tage nach dem Verspritzen durch Augenschein der Blätter bewertet und in einer von 0 bis 9 reichenden Skala aufgezeichnet (0 = keine Wirkung und 9 = sehr starke herbzide Wirkung). Die Bewertung 2 entspricht etwa einer Reduktion des Frischgewichts von Stengel und Blätter der behandelten Pflanzen von 3,5 %, eine Bewertung 5 entspricht annähernd einer Gewichts- reduktion von 25 % und eine Bewertung 8 einer Gewichtsreduktion von 85 %.

Die bei den Versuchen erhaltenen Ergebnisse sind in Tabelle I wiedergegeben.

## TABELLE I

| Verbindung | Dosierung kg/ha bez. auf aktiven Wirkstoff | Phytotoxidität, Bewertung | | | | | | |
|---|---|---|---|---|---|---|---|---|
| | | Mais | Hafer | Guinea-gras | Erbse | Rot-klee | Raps | Zucker-rübe |
| Formulierung gemäß: | | | | | | | | |
| DE-OS 16 43 527 | 10 | 3 | 4 | 3 | 6 | 9 | 9 | 5 |
| | 1 | 2 | 2 | 0 | 2 | 4 | 4 | 1 |
| Beispiel 3 | 5 | 2 | 2 | 0 | 3 | 5 | 5 | 4 |
| | 0,5 | 0 | 0 | - | - | 1 | 2 | 0 |
| Beispiel 4 | 5 | 3 | 3 | 2 | 2 | 4 | 6 | 1 |
| | 0,5 | 2 | 1 | 0 | 0 | 0 | 0 | 0 |
| Beispiel 5 | 5 | 2 | 2 | 2 | 1 | 5 | 4 | 2 |
| | 0,5 | 0 | 1 | 0 | 0 | 1 | 1 | 0 |

Beispiel 2

Regulierung des Pflanzenwachstums von Flughafer

Formulierung gemäß DE-OS 16 43 527 und die neuen Formulierungen gemäß der Ansprüche 3 - 6.

Unter Verwendung eines logarithmischen Verspritzers wurde diese Lösung auf die Blätter von angebautem Hafer, Flughafer und Weizen angewendet, die unter Treibhausbedingungen gezogen waren.

Die Verbindung wurde bei 7 Dosierungen zwischen 10 und 0,1 kg/ha verspritzt und die Phytotoxizität auf einer Schätzwertskala 10 Tage nach dem Verspritzen wiedergegeben. Die Phytotoxizitätswerte wurden in %-Sätzen für die Wachstumsinhibierung umgerechnet und gegen die Dosierungsmengen aufgetragen unter Verwendung einer extrapolierten Skala. Die durch diese Bewerungsmethode erhaltenen Werte sind in Tabelle II angegeben.

T a b e l l e II

| Verbindung | Wachstums-Inhibierung % | Phytotoxizitätswert kg/ha Flughafer | Gerste | Weizen |
|---|---|---|---|---|
| Formulierung gemäß: | | | | |
| DE-OS 16 43 527 | 10 | 0,2 | 10 | 0,2 |
| | 50 | 0,25 | | 0,42 |
| | 90 | 10 | | 10 |
| Beispiel 6 | 30 | < 0,05 | 10 | 10 |
| | 60 | 0,15 | | |
| | 100 | 7 | | |

Beispiel 3

16 g N-Benzoyl-N-(3,4-dichlorphenyl)-DL-alaninethylester
16 g Phospholipid
12 g Toluol
12 g Xylol
16 g Isophoron
16 g N-(2-Hydroxyethyl)-capronsäureamid
8 g Cremophor EL
4 g PEG 6000

Das Phospholipid wird zusammen mit den Hilfsstoffen in dem Lösungsmittelgemisch unter Rühren gelöst und anschließend der N-Benzoyl-N-(3,4-dichlorphenyl)-DL-alaninethylester unter Rühren und leichter Erwärmung eingebracht.

Analog Beispiel 3 werden die folgenden Konzentrate hergestellt:

Beispiel 4

20 g N-Benzoyl-N-(3-chlor-4-fluorphenyl)-DL-alaninmethylester
12 g Phospholipid
25 g Ethylbenzol-Mischung
15 g Isophoron
10 g N-(2-Hydroxyethyl)-capronsäureamid
12 g Cremophor EL
6 g PEG 400

Beispiel 5

12 g N-Benzoyl-N-(3-chlor-4-fluorphenyl)-DL-alaninisopropylester
25 g Phospholipid
25 g Isopropylmyristat
25 g Softigen
12 g Ethanol
1 g Stabilisatoren

Beispiel 6

| | | |
|---|---|---|
| 18 | g | N-Benzoyl-N-(3-chlor-4-fluorphenyl)-2-alanin-isopropylester |
| 20 | g | Phospholipid |
| 36 | g | Isophoron |
| 16 | g | Glycerin |
| 5 | g | Cremophor EL |
| 5 | g | N-(2-Hydroxyethyl)-capronsäureamid |

Die in den vorstehenden Beispielen 3 bis 6 verwendeten Phospholipid-Produkte hatten die folgende Zusammensetzung, wobei die angegebenen Prozente Gewichtsprozente sind:

Beispiel 3:
4o % Phosphatidylcholin
3o % Phosphatidylethanolamin
25 % N-acylphosphatidylethanolamin
5 % sonstige Phospholipide

Beispiel 4:
42 % Phosphatidylcholin
25 % Phosphatidylethanolamin
25 % N-acylphosphatidylethanolamin
8 % sonstige Phospholipide

Beispiel 5:
45 % Phosphatidylcholin
25 % Phosphatidylethanolamin
21 % N-acylphosphatidylethanolamin
9 % sonstige Phospholipide

Beispiel 6:
4o % Phosphatidylcholin
28 % Phosphatidylethanolamin
27 % N-acylphosphatidylethanolamin
5 % sonstige Phospholipide

## Patentansprüche

1. Herbizid-Emulsionskonzentrate, dadurch gekennzeichnet, daß sie aus

   a) einem herbiziden Wirkstoff der allgemeinen Formel I

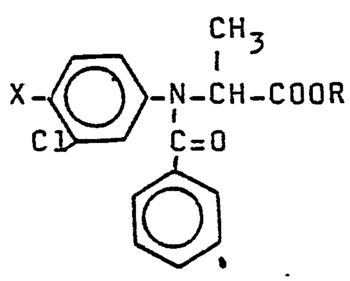

I

   in der X = Cl oder F und R = $C_{1-4}$ Alkyl

   b) einem Phospholipid

   und

   c) einem Hydroxyethylamid der allgemeinen Formel II

$$CH_3(CH_2)_n\text{-}CONHCH_2CH_2OH \qquad II$$

   in der n = 3,4 oder 5

   bedeuten

   neben üblichen Träger-, Verdünnungs-, Lösungs-, Versprühungs- und/oder anderen inerten Hilfsmitteln bestehen.

2. Herbizid-Emulsionskonzentrate, dadurch gekennzeichnet, daß als Phospholipid ein oder mehrere Phospholipide aus der Gruppe Phosphatidylcholin, den hydrierten Phosphatidylcholinen, Phosphatidylethanolamin, den N-Acylphosphatidylethanolaminen, Phosphatidylinosit, Phosphatidylserin, Lysolecithin und Phosphatidylglycerol eingesetzt werden.

3. Herbizid-Emulsionskonzentrate gemäß dem Anspruch 1 oder 2 dadurch gekennzeichnet, daß als Phospholipid Phosphatidylcholin oder Mischungen aus Phosphatidylcholin und Phosphatidylethanolamin oder Mischungen aus Phosphatidylcholin/Phosphatidylethanolamin und N-Acylphosphatidylethanolamin eingesetzt werden.

4. Herbizid-Emulsionskonzentrate gemäß der Ansprüche 1 - 3, dadurch gekennzeichnet, daß als Phospholipid ein Phospholipid mit einem Gehalt von 10 - 60 % Phosphatidylcholin eingesetzt wird.

5. Herbizid-Emulsionskonzentrate gemäß der Ansprüche 1-4, dadurch gekennzeichnet, daß als Phospholipid ein Phospholipid bestehend aus:

10 - 50 % Phosphatidylcholin
10 - 30 % Phosphatidylethanolamin
10 - 30 % N-Acylphosphatidylethanolamin

eingesetzt wird.

6. Herbizid-Emulsionskonzentrate gemäß der Ansprüche 1-5, dadurch gekennzeichnet, daß das Gewichtsverhältnis von a : b

1 : 0,5 bis 1 : 5

beträgt.

7. Herbizid-Emulsionskonzentrate gemäß der Ansprüche 1-5, dadurch gekennzeichnet, daß das Gewichtsverhältnis von a : b

1 : 1 bis 1 : 2

beträgt.

8. Herbizid-Emulsionskonzentrate gemäß der Ansprüche 1-5, dadurch gekennzeichnet, daß das Gewichtsverhältnis von a : b : c

1 : 1 : 1

beträgt.

9. Herbizid-Emulsionskonzentrate gemäß der Ansprüche 1-8, dadurch gekennzeichnet, daß als Herbizid N-Benzoyl-N-(3,4-dichlorphenyl)-DL-alaninethylester eingesetzt wird.

10. Herbizid-Emulsionskonzentrate gemäß der Ansprüche 1-8, dadurch gekennzeichnet, daß als Herbizid N-Benzoyl-N-(3-chlor-4-fluorphenyl)-DL-alaninmethylester eingesetzt wird.

11. Herbizid-Emulsionskonzentrate gemäß der Ansprüche 1-8, dadurch gekennzeichnet, daß als Herbizid N-Benzoyl-N-(3-chlor-4-fluorphenyl)-DL-alaninisopropylester eingesetzt wird.

12. Herbizid-Emulsionskonzentrate gemäß der Ansprüche 1-8, dadurch gekennzeichnet, daß als Herbizid N-Benzoyl-N-(3-chlor-4-fluorphenyl)-L-alaninisopropylester eingesetzt wird.

13. Herbizid-Emulsionskonzentrate gemäß einem oder mehreren der Ansprüche 1-7, dadurch gekennzeichnet, daß der Wirkstoffgehalt im Konzentrat 16 - 20 % beträgt.

14. Verwendung von Herbizid-Emulsionskonzentraten gemäß einem oder mehreren der Ansprüche 1-7 zur Bekämpfung von Unkräutern

15. Verfahren zur Herstellung von Herbizid-Emulsionskonzentraten gemäß einem oder mehreren der Ansprüche 1-13, dadurch gekennzeichnet, daß das Phospholipid in einem organischen Lösungsmittel bzw. Lösungsmittelgemisch unter Zusatz üblicher Hilfsmittel gelöst wird und in diese Lösung ggfs. durch Erwärmen und/oder Rühren das Herbizid eingebracht wird.

16. Verfahren zur Herstellung von Herbizid-Emulsionskonzentraten gemäß einem oder mehreren der Ansprüche 1-13, dadurch gekennzeichnet, daß das oder die Herbizide mit einem oder mehreren Phospholipiden ggfs. unter Zusatz üblicher Füll- und Hilfsmittel in einem organische Lösungsmittel gelöst bzw. aufgeschlämmt wird.

17. Verfahren zur Herstellung von Herbizid-Emulsionskonzentraten gemäß einem oder mehreren der Ansprüche 1-13, dadurch gekennzeichnet, daß das Herbizid in Wasser oder Wasser-Alkohol-Mischungen zusammen mit einem oder mehreren Phospholipiden unter Rühren und/oder leichter Erwärmung, und/oder Ultraschall gelöst wird.

0099029

Europäisches Patentamt

# EUROPÄISCHER RECHERCHENBERICHT

Nummer der Anmeldung

EP 83 10 6405

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| P,Y | EP-A-0 068 295 (A. NATTERMANN & CIE.) * Beispiele 16-18, 23,25,26; Ansprüche 1-4, 7-10; Seite 2, Zeile 26 - Seite 3, Zeile 7 * | 1-4,6-17 | A 01 N 57/12<br>A 01 N 25/04 //<br>(A 01 N 57/12<br>A 01 N 37/46 ) |
| D,Y | DE-B-1 643 527 (SHELL) * Ansprüche; Spalte 4, Zeile 56 - Spalte 5, Zeile 35; Beispiel 18 * | 1,9,19 | |
| D,Y | DE-C-2 349 970 (SHELL) * Ansprüche; Spalte 3, Zeilen 14-34 * | 1,10-12,19 | |
| | | | RECHERCHIERTE SACHGEBIETE (Int. Cl. 3) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 20-10-1983 | FLETCHER A.S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82